# EUROPÄISCHE PATENTSCHRIFT

(11) **EP 1 071 631 B1**
(45) Veröffentlichungstag und Bekanntmachung des Hinweises auf die Patenterteilung: **25.06.2003**
(21) Anmeldenummer: 99945682.5
(22) Anmeldetag: 14.04.1999
(51) Int. Cl.: B65H 59/38, G02B 6/44

(54) **VERFAHREN SOWIE VORRICHTUNG ZUM ABWICKELN EINES LANGGESTRECKTEN GUTS**
METHOD AND DEVICE FOR UNWINDING AN ELONGATED PRODUCT
PROCEDE ET DISPOSITIF DE DEROULEMENT D'UN PRODUIT ALLONGE

(30) Priorität: 14.04.1998 DE 19816444
(43) Veröffentlichungstag der Anmeldung: 31.01.2001
(73) Patentinhaber: SIEMENS AKTIENGESELLSCHAFT, 80333 München (DE)
(72) Erfinder: KNOCH, Horst, D-96450 Coburg (DE); RENNER, Frank, D-96465 Neustadt (DE); TISCHER, Swen, D-96465 Neustadt (DE)
(74) Vertreter: Fischer, Volker, Dipl.-Ing.
(86) Internationale Anmeldenummer: DE9901114
(87) Internationale Veröffentlichungsnummer: WO99052807

(56) Entgegenhaltungen:
- EP-A- 0 182 981
- DE-A- 3 005 530
- DE-A- 3 120 721
- DE-A- 3 525 022
- DE-A- 3 929 897
- DE-A- 4 443 503
- US-A- 4 250 130
- US-A- 4 437 619
- US-A- 4 774 824

## Beschreibung

Die Erfindung betrifft ein Verfahren zum Abwickeln eines langgestreckten Guts von einer Ablagevorrichtung, auf der das Gut mit einer Vielzahl von Windungen abgelegt ist,

Aus der EP 0 182 981 ist eine Vorrichtung bekannt, bei der ein Lichtwellenleiter aus einem angetriebenen, rotierenden Teller über einen schwenkbar aufgehängten Hebel sowie eine nachfolgende, frei drehbare Umlenkrolle abgezogen wird. Die Umlenkrolle liegt dabei in einer Ebene senkrecht zur Tellerfläche. Ihre Lauffläche verläuft tangential zu den Wicklungen des Lichtwellenleiters auf dem Teller. Der Hebel weist an seinem dem Teller benachbarten Ende eine Öse zum Führen des Lichtwellenleiters auf. Durch seine Schwenkbarkeit parallel zur Abzugsebene des Lichtwellenleiters kann er dem Auswandern des Lichtwellenleiters beim Wechsel von einer Wickelbahn zur nächsten in gewissen Grenzen folgen. Durch die Ausschwenkung des Hebels wird ein Geber wie z.B. ein Potentiometer betätigt, das die Drehzahl des Teller derart beeinflußt, daß der Hebel wieder in seine Mittellage gelangt. Ein einwandfreies Abwickeln bzw. Herausziehen des derart abgelegten Lichtwellenleiters vom Teller für nachfolgende Weiterverarbeitungsschritte kann in der Praxis erschwert sein. Insbesondere besteht die Gefahr, daß der vom Teller abgezogene Lichtwellenleiter mit einer unzulässig hohen Zugspannung beaufschlagt wird.

Aus der US 4 774 824 A und US 4 250 130 A sind Verfahren zum Abwickeln von Drähten und Plastikrohren bekannt.

Der Erfindung liegt die Aufgabe zugrunde, einen Weg aufzuzeigen, wie ein langgestrecktes Gut von seiner Ablagevorrichtung in einfacher Weise einwandfrei abgewickelt werden kann. Gemäß der Erfindung wird diese Aufgabe bei einem Verfahren und einer Vorrichtung der eingangs genannten Art durch die Merkmale des Anspruches 1 und des Anspruches 20 gelöst.

Dadurch, daß für das langgestreckte Gut entlang seinem Längs-Abzugsweg nach seinem Abtransport von seiner Ablagevorrichtung mindestens eine geschlossene Schlaufe gebildet wird, Veränderungen der Geometrieform dieser Schlaufe erfaßt werden und daraus mindestens ein Steuerkriterium für die Abtransportbewegung des langgestreckten Guts abgeleitet wird, läßt sich das langgestreckte Gut von seiner Ablagevorrichtung unter einer Vielzahl praktischer Gegebenheiten einwandfrei abwickeln.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: schematisch in perspektivischer Darstellung ein Ausführungsbeispiel einer Abwickelvorrichtung zum erfindungsgemäßen Abwickeln eines langgestreckten Nachrichtenkabelelements von einer Vorratspule,
- Figur 2: in schematischer Seitenansicht die Abwickelvorrichtung von Figur 1 zusammen mit einer nachgeordneten Verseilvorrichtung, der das abgewickelte Nachrichtenkabelelement zugeführt wird, und
- Figur 3: schematisch in perspektivischer Darstellung ein Ausführungsbeispiel einer Abwickelvorrichtung zum erfindungsgemäßen Abwickeln eines langgestreckten Nachrichtenkabelelements von einem Teller.

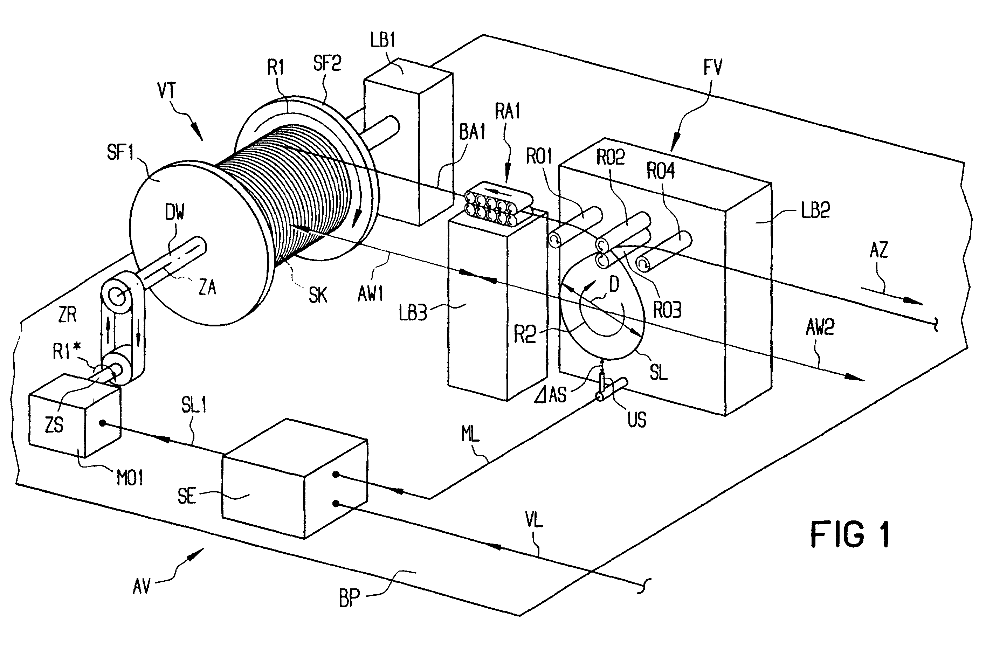

Elemente mit gleicher Funktion und Wirkungsweise sind in den Figuren 1 mit 3 jeweils mit denselben Bezugszeichen versehen.

Figur 1 zeigt schematisch in perspektivischer Darstellung eine Abwickelvorrichtung AV, die nach dem erfindungsgemäßen Prinzip arbeitet. Ihre Bauteile sind dabei auf einer weitgehend planen Bodenplatte BP angeordnet. Diese Bodenplatte BP ist in der Figur 1 insbesondere stellvertretend für einen Werkshallenboden miteingezeichnet.

Die Abwickelvorrichtung AV weist eine Vorratsspule bzw. Vorratstrommel VT auf, auf derem etwa kreiszylinderförmigen Spulenkörper SK eine optische Ader BA1, insbesondere eine Lichtwellenleiter-Bündelader, mit einer Vielzahl von Windungen als langgestrecktes Gut abgelegt ist. Der Spulenkörper Sk wird dabei in axialer Richtung (bezogen auf seine Zentralachse) an seinen beiden Stirnseiten durch je einen kreisscheibenförmigen Seitenflansch SF1, SF2 begrenzt. Auf diese Weise ist entlang der Längserstreckung des Spulenkörpers SK ein seitlich eingefaßter Ablagebereich für die Windungen der Lichtwellenleiterader BA1 gebildet. Dadurch kann ein Herabfallen von einzelnen Umwindungen der Lichtwellenleiterader BA1 vom Spulenkörper SK weitgehend vermieden werden. Die Vorratsspule VT ist auf einer Drehachse bzw. Drehwelle DW drehbar gelagert. Diese Drehwelle DW ist vorzugsweise als kreiszylinderförmiger Stab ausgebildet. Sie erstreckt sich im wesentlichen parallel zur planen Bodenplatte BP. Mit einem Ende ist die Drehwelle DW in einem Lagerbock LB1 drehbar gelagert. Ihr anderes Ende steht nach außen frei ab. Dadurch kann eine leere Vorratsspule zum Wechseln in einfacher Weise von der Drehwelle DW heruntergeschoben und eine neue, volle Spule auf sie aufgeschoben werden. Zum Abwickeln der Lichtwellenleiterader BA1 sitzt die Vorratsspule VT vorzugsweise fest auf der Drehwelle DW auf. Sie läßt sich insbesondere auf der Drehwelle DW in axialer sowie in Umfangsrichtung lösbar arretieren.

Zum rotierenden Antrieb der Vorratsspule VT steht die Drehwelle DW in Wirkverbindung mit einer Antriebseinrichtung MO1, insbesondere einem Motor. Dabei ist in der Figur 1 die durch den Motor bewirkte Rotationsbewegung der Vorratsspule VT durch einen Rotationspfeil R1 eingedeutet. Die Antriebseinrichtung MO1 weist in der Figur 1 eine rotierende Antriebswelle ZS, insbesondere Zahnriemenscheibe auf. Deren Rotationsrichtung ist durch einen Rotationspfeil R1* angedeutet. Die Antriebswelle ZW erstreckt sich im wesentlichen parallel zur Drehwelle DW der Vorratsspule VT. Sie ist insbesondere dem freien Ende der Drehwelle DW zugeordnet. Im Bereich des freien Endes der rotierend angetriebenen Antriebswelle ZS sowie der Drehwelle DW läuft ein Zahnriemen ZR endlos um. Dieser Zahnriemen ZR sitzt dabei auf einem Teilumfang der Drehwelle DW sowie auf einem Teilumfang der Antriebswelle ZS festgespannt auf.

Die Antriebseinrichtung MO1 wird über eine Steuerleitung SL1 von einer Steuereinrichtung SE aus angesteuert. Insbesondere lassen sich dadurch Drehzahl und/oder Drehmoment, das von der Antriebseinrichtung MO1 auf die Vorratsspule VT ausgeübt wird, in gewünschter Weise von der Steuereinrichtung SE aus einstellen.

Zweckmäßigerweise kann mit Hilfe der Antriebseinrichtung MO1 nicht nur eine antreibende Wirkung, sondern zusätzlich oder unabhängig hiervon auch eine bremsende Wirkung auf die Vorratsspule VT ausgeübt werden.

Die Lichtwellenleiterader BA1 ist mit einer Vielzahl von annäherungsweise kreisringförmigen Windungen auf der Außenoberfläche des kreiszylinderförmigen Speicherkörpers SK abgelegt. Entlang der Längserstreckung des Speicherkörpers SK sind diese Windungen pro Wickellage in erster Näherung parallel nebeneinander angeordnet. Auf diese Weise ist auf der Vorratsspule VT ein im-wesentlichen kreiszylinderförmiges Wickelpaket der Lichtwellenleiterader BA1 vorrätig gehalten.

Von diesem rotierend angetriebenen Wickelpaket wird die Lichtwellenleiterader BA1 unter Zuhilfenahme einer nachgeordneten Abzugseinrichtung RA1, insbesondere einem Raupenbandabzug, entlang ihrer axialen Längserstreckung abgezogen bzw. abtransportiert. Die Längs- Abtransportbewegung der Bündelader BA1 ist in der Figur 1 mit einem Pfeil AZ angedeutet. In der Figur 1 verläuft dabei der Längs-Abzugsweg AW1 der Lichtwellenleiterader BA1 beispielhaft in erster Näherung geradlinig sowie in einer Ebene, die vorzugsweise im wesentlichen parallel zur Bodenplatte BP liegt. Dazu wird die Lichtwellenleiterader BA1 etwa bei der 12-Uhr-Position, d.h. von der Oberseite des Wickelpakets abgezogen und mit etwa konstanter Höhe gegenüber dem Boden BP der Abzugseinrichtung RA1 zugeführt. Die Abzugseinrichtung RA1 ist dabei erhöht auf einem Gestell LB3 fest angebracht. Für sie ist während des Abwickelvorgangs der Lichtwellenleiterader vorzugsweise ein konstantes Drehmoment eingestellt. Sie dient als Hilfsabzug zum Abziehen der Ader unter Zugkraft von der Vorratsspule VT.

In Abzugsrichtung AZ betrachtet wird die Lichtwellenleiterader BA1 nach der Abzugseinrichtung RA1 aus ihrem ursprünglichen, hier im Ausführungsbeispiel geradlinig verlaufenden, Längsabzugsweg AW1 mit Hilfe einer nachfolgenden Führungsvorrichtung FV zu einer einzelnen Schlaufe SL ausgelegt. Die Führungsvorrichtung FV weist dazu mehrere, vorzugsweise drehbar gelagerte Umlenkrollen RO1 mit RO4 an einem Gestell oder Lagerblock LB2 auf. Diese Umlenkrollen RO1 mit RO4 sind dabei vorzugsweise im wesentlichen kreiszylinderförmig ausgebildet. Sie erstrecken sich jeweils quer, d.h. lateral, insbesondere senkrecht, zum axialen Abzugsweg AW1 der Lichtwellenleiterader BA1. Die Lichtwellenleiterader BA1 wird von der Abzugseinrichtung RA1 kommend zunächst über die erste, eingangsseitige Umlenkrolle RO1 der Führungsvorrichtung FV geführt und anschließend zwischen einem Rollenpaar RO2/RO3 hindurchgeführt und dabei aus ihrem ursprünglichen, axialen Abzugsweg AW1 ausgelenkt. Das Rollenpaar RO2/RO3 ist durch zwei kreiszylinderförmige Umlenkrollen gebildet, die parallel übereinanderliegend angebracht sind. Ihr Zwischenabstand voneinander ist zweckmäßigerweise etwa dem Außendurchmesser der Lichtwellenleiterader BA1 gewählt, so daß diese in lateraler Richtung bezogen auf ihren axialen Abzugsweg eine gewisse Führung und Lagefixierung erhält. Die Ader BA1 hängt von diesem Rollenpaar RO2/RO3 (bezogen auf den waagrechten, planen Boden BP) in vertikaler Richtung frei beweglich herunter. Sie wird um etwa 360° aus ihrer ursprünglichen Abtransportrichtung (nach der Abzugseinrichtung RA1) herumgebogen und wieder zwischen den beiden Führungsrollen RO2/RO3 hindurchgeführt, um dann nach der Schlaufe SL einen neuen, axialen Abtransportweg bzw. Laufweg AW2 einzuschlagen. Die untere Führungsrolle RO3 wirkt dabei in der Art eines Querbalkens, auf dem die Ader BA1 aufliegt. Sie hängt von diesem Querbalken im wesentlichen in Form eines Kreisringes durch ihr Eigengewicht frei beweglich herunter. Die Ader BA1 wird somit in Form einer Schlaufe bzw. Schlinge ausgelegt, die an der unteren Umlenkrolle RO3 frei durchhängend aufgehängt ist. Vom Umlenkrollenpaar RO2/RO3 wird die Lichtwellenleiterader BA1 der ausgangsseitigen Umlenkrolle RO4 zugeführt und oben auf diese aufgelegt. Die Ader BA1 wird dann ausgehend von dieser Umlenkrolle RO4 entlang dem axialen Längs- Abtransportweg AW2, der hier im Ausführungsbeispiel ebenfalls im wesentlichen geradlinig verläuft, mindestens einer nachfolgenden Weiterverarbeitungseinrichtung zugeführt. Diese ist in der Figur 1 der zeichnerischen Übersichtlichkeit halber weggelassen worden.

Gegebenenfalls kann es bereits genügen, lediglich eine einzige Umlenkrolle wie z.B. RO3 zur vertikalen Aufhängung der Schlaufe SL vorzusehen. Zweckmäßig kann es insbesondere sein, lediglich die Umlenkrollen RO1, RO4 oder nur das Rollenpaar RO2/RO3 vorzusehen. Insbesondere kann es auch ausreichend sein, die jeweilige Umlenkrolle feststehend, d.h. nicht drehgelagert, am Gestell LB2 anzubringen.

Weiterhin kann es ggf. zweckmäßig sein, die jeweilige Schlaufe der Lichtwellenleiterader BA1 nicht vertikal, sondern im wesentlichen horizontal (bezogen auf den Boden BP) z.B. auf einer planen Platte auszulegen, wo sich die Geometrieform der Schlaufe frei beweglich einstellen kann.

Dann können die Umlenkrollen in vorteilhafter Weise ganz entfallen.

Zusammenfassend betrachtet wird also die Lichtwellenleiterader BA1 derart von ihrer Vorratsspule VT abtransportiert, daß an mindestens einer Längsstelle ihres axialen Längsabtransportwegs mindestens eine frei bewegliche Schlaufe SL gebildet wird. Insbesondere kann es ggf. auch zweckmäßig sein, in lateraler Richtung bezüglich dem Längs-Abtransportweg betrachtet mehrere Schlaufen etwa parallel nebeneinander auszulegen. Insbesondere können Schlaufen der Ader auch an mehreren aufeinanderfolgenden Längsstellen des axialen Ader-Abtransportwegs vorgesehen sein.

Die Schlaufe SL wird in vorteilhafter Weise annäherungsweise mit derselben Krümmungsrichtung ausgelegt, wie die Lichtwellenleiterader BA1 auf der Vorratsspule VT aufgewickelt worden war. Die Krümmungsrichtung der Schlaufe SL ist in der Figur 1 durch einen Rotationspfeil R2 angedeutet. Dieser Rotationspfeil R2 verläuft in dieselbe Drehrichtung wie der Rotationspfeil R1 für die rotierend angetriebene Vorratsspule VT. War die Ader BA1 beispielsweise mit Windungen im Uhrzeigersinn, d.h. mit rechtsgekrümmten Windungen auf die Vorratsspule VT aufgewickelt, so wird sie zweckmäßigerweise aus ihrem ursprünglichen, axialen Abzugsweg AW1 ebenfalls im Uhrzeigersinn zur Schlaufe SL herumgebogen. Dadurch sind Wechselbiegungen der Ader BA1 weitgehend vermieden. Die Ader BA1 wird also nicht entgegen ihrer ursprünglichen Wickelkrümmung bei der Schlaufenlegung gebogen, was in der Praxis gegebenenfalls den Einsatz unzulässig hoher Biegekräfte erfordern würde und zu unzulässig hohen Beanspruchung der Lichtwellenleiterader führen könnte. Durch die Beibehaltung der Krümmungsrichtung der Ader, mit der diese auf ihrer Vorratsspule aufgewickelt war, verlegt sich die Ader BA1 nahezu selbsttätig zur Schlaufe SL. Denn während ihrer Lagerung auf der Vorratsspule VT wird der Ader BA1 oftmals durch plastische Materialverformung eine bestimmte Biegerichtung aufgeprägt. Diese Wickelrichtung macht sich insbesondere dann vor allem bemerkbar, wenn die Ader unmittelbar nach ihrem Herstellungsprozeß mit noch erwärmter Kunststoffaußenhülle auf die Vorratsspule aufgewickelt wird. Das noch nicht ganz abgekühlte sowie erstarrte und damit in gewissen Grenzen noch verformbare Kunststoffmaterial der Aderhülle kann dann je nach Wickelrichtung mit einer Krümmung in oder gegen den Uhrzeigersinn beaufschlagt sein. Durch Verlegung der Schlaufe SL in diese ursprüngliche Wickelrichtung kann diese weitgehend biegekraftarm ausgelegt werden.

Diese Art von Schlaufenverlegung ist somit in vorteilhafter Weise universell für eine Vielzahl von langgestreckten Gütern mit unterschiedlichen Materialeigenschaften, Querschnittsabmaßen und Aufbauten stets möglich. Wenn für die Schlaufe dieselbe Krümmungsrichtung gewählt wird, mit der das jeweilige langgestreckte Gut auf seiner Ablagevorrichtung aufgewickelt worden war, so kann dieses selbst noch bei hoher Material- Eigensteifigkeit zu einer Schlaufe ausgelegt werden. Auch sehr dicke oder sehr dünne Wickelgüter sind zu einer solchen Schlaufe mit kreisringförmiger Querschnittsform stets in einfacher sowie eindeutiger Weise verlegbar. Allgemein ausgedrückt kann also eine solche Schlaufe mit eindeutiger Geometrieform stets ausgelegt und mit deren Hilfe die Abtransportbewegung des Gutes stets in präzise kontrollierbarer Weise gesteuert oder geregelt werden.

Gegebenenfalls kann es zweckmäßig sein, den Außendurchmesser der kreisringförmigen Schlaufe SL in erster Näherung etwa dem Wickeldurchmesser der Windungen der Ader BA1 zu wählen. Dadurch sind zusätzliche Biegekräfte zum Umbiegen der Ader entgegen ihrer vorgeprägten Wickelrichtung bei der Schlaufenverlegung noch weiter verbessert vermieden.

Auf diese Weise wird der Außendurchmesser D der kreisringförmigen Schlaufe SL in erster Linie durch das Eigengewicht der Lichtwellenleiterader BA1 sowie durch die Abzugsgeschwindigkeit bestimmt, mit der die Ader BA1 entlang dem Abtransportweg AW2 von der Führungsvorrichtung FV wegtransportiert wird.

Dadurch ist es in vorteilhafter Weise ermöglicht, Veränderungen der Geometrieform der Schlaufe SL als Steuerkriterium für die Abwickel- und/oder Abtransportbewegung der optischen Ader BA1 heranzuziehen. Zu diesem Zweck werden Veränderungen der Geometrieform der Schlaufe SL mit Hilfe eines Meßfühlers erfaßt. In der Figur 1 ist unterhalb der vertikal zur Bodenplatte BP ausgelegten Schlaufe SL ein berührungsloser Meßfühler US am Gestell LB2 mit Abstand zur Schlaufe SL angebracht. Insbesondere ist als Meßfühler US ein Ultraschallsensor verwendet. Dieser Meßfühler US mißt Abstandsveränderungen ΔAS zur Schlaufe SL, und damit indirekt etwaige Veränderung deren Außendurchmessers. Der Meßfühler US wandelt diese aufgenommenen Abstandveränderungen ΔAS der Schlaufe SL in elektrische Meßsignale um, und schickt diese über die Meßleitung ML an die Steuereinrichtung SE. Die Steuereinrichtung SE zieht dann die gemessenen Abstandsveränderungen ΔAS der Schlaufe SL von dem berührungslosen Meßfühler US als Steuerkriterium zur Beeinflussung der Abtransportbewegung der optischen Ader BA1 entlang deren axialen Längsabzugsweg AW1 und/oder Abtransportweg AW2 her. Gegebenenfalls kann es auch zweckmäßig sein, als Steuerkriterium die Veränderung des Außendurchmessers der kreisringförmigen Schlaufe SL mit einem geeigneten Meßfühler direkt zu messen. Vorzugsweise werden die Veränderungen der Geometrieform der Schlaufe SL während des Abwickelvorgangs fortlaufend gemessen und der Steuereinrichtung SE zur Auswertung bereitgestellt. Die Steuereinrichtung SE leitet dann fortlaufend aus den aufgenommenen Meßdaten mindestens ein Steuerkriterium zur Regulierung der Abtransportbewegung der Ader BA1 entlang deren Abzugsweg AW1 zwischen der Vorratsspule VT und der Abzugseinrichtung RA1 und/oder entlang dem der Abzugseinrichtung RA1 nachfolgenden Transportweg AW2 ab. Aufgrund des während des Abwickelvorgangs fortlaufend gewonnenen Steuerkriteriums kann somit die Steuereinrichtung SE über die Steuerleitung SL1 fortlaufend die Drehzahl der Antriebseinrichtung MO1 steuern.

Das aus den gemessenen Veränderungen der Schlaufengeometrie abgeleitete Steuerkriterium wird zweckmäßigerweise dazu verwendet, die Abtransportbewegung der Ader BA1 entlang deren longitudinalen Abtransportweg AW2 nach der Abzugseinrichtung RA1 derart zu beeinflussen, daß ein vorgegebener Durchmesser D der Schlaufe SL stets weitgehend konstant beibehalten wird. Dadurch ist es ermöglicht, die Ader BA1 einer nachfolgenden Weiterverarbeitungseinrichtung weitgehend zugspannungsarm, insbesondere zugspannungsfrei, d.h. locker bzw. entspannt zuzuführen. Durch die frei bewegliche, vertikal durchhängende Schlaufe SL können zudem etwaige Geschwindigkeitsschwankungen, die durch (der Abzugseinrichtung RA1) nachgeordnete Nachfolgemaschinen wie z.B. einer Verseilmaschine hervorgerufen werden, weitgehend durch entsprechende Durchmesserveränderungen kompensiert werden. Deshalb sind störende Einflüsse dieser Geschwindigkeitsschwankungen auf den Abwickelvorgang der Ader BA1 von der Vorratsspule VT weitgehend vermieden. Auf diese Weise sind hohe Abwickelgeschwindigkeiten der optischen Ader BA1 ermöglicht. Denn ruckartige Geschwindigkeitsveränderungen, die von nachfolgenden Verarbeitungsmaschinen der optischen Ader herrühren könnten, werden durch die Schlaufe SL vom Abwickelvorgang der rotierend angetriebenen Vorratsspule VT und ihrem nachgeordneten Hilfsabzug RA1 entkoppelt. Dadurch sind insbesondere unzulässig hohe Zugspannungbeanspruchungen der optischen Ader BA1 während deren Abwickelbewegung von der Vorratsspule VT oder gar Abrisse der optischen Ader weitgehend vermieden. Kommt es beispielsweise entlang dem longitudinalen Abtransportweg AW2 von der Abzugseinrichtung RA1 zu einer nachfolgenden Weiterverarbeitungsmaschine zu einer kurzzeitigen Geschwindigkeitserhöhung der Ader, so verkleinert sich der Durchmesser D der Schlaufe SL und gleicht dadurch das Mehr an abtransportierter Aderlänge aus. Kommt es hingegen zu einem kurzfristigen Geschwindigkeitsabfall der Ader entlang dem Abbtransportweg AW2, so vergrößert sich der Schlaufendurchmesser D entsprechend. Dadurch verbleibt die Ader entlang ihrer Längserstreckung auf dem Abtransportweg AW2 stets weitgehend zugspannungsarm.

Für eine möglichst zugspannungsarme Abtransportbewegung wird der optischen Ader Ba1 wird für die Schlaufe SL zweckmäßigerweise ein Außendurchmesser D zwischen 20 cm und 150 mm vorgegeben, der durch entsprechende Steuerung und/oder Regelung der Abtransportbewegung der optischen Ader BA1 stets weitgehend beibehalten werden soll. Solange dieser Außendurchmesser oder allgemein ausgedrückt die vorgegebene Geometrieform, insbesondere Größe, der Schlaufe während der Abtransportbewegung der optischen Ader BA1 von der Vorratsspule VT weitgehend beibehalten wird, ist auch sichergestellt, daß die Ader BA1 die Zugeinrichtung RA1 weitgehend locker, d.h. ohne die Beaufschlagung unzulässig hoher Zugspannungskräfte verläßt und somit weitgehend zugspannungsarm nachfolgenden Weiterverarbeitungsvorrichtungen zugeführt werden kann. Die Abzugskraft, die zum Vorwärtstransport der Ader BA1 nach der Abzugseinrichtung RA1 aufgewendet wird, entspricht dabei im wesentlichen lediglich noch derjenigen zu vernachlässigenden Abzugskraft, die durch das Eigengewicht der optischen Ader BA1 bestimmt wird.

Die Schlaufe SL wird durch einen einmaligen Umlauf, d.h. eine einzelne Umwindung der optischen Ader BA1 gebildet. Gegebenenfalls kann es auch zweckmäßig sein, mehrere solcher Schlaufen SL parallel nebeneinander lateral zur Längsachse der Ader BA1 vorzusehen. Dadurch wird noch mehr Ausgleichslänge zur Kompensation von Geschwindigkeitsschwankungen nachfolgender Weiterverarbeitungsmaschinen bereitgestellt. Gegebenenfalls kann es auch zweckmäßig sein, an mehreren hintereinander liegenden Längsstellen des Längsabzugswegs der Ader BA1 solche Ausgleichsschlaufen vorzusehen.

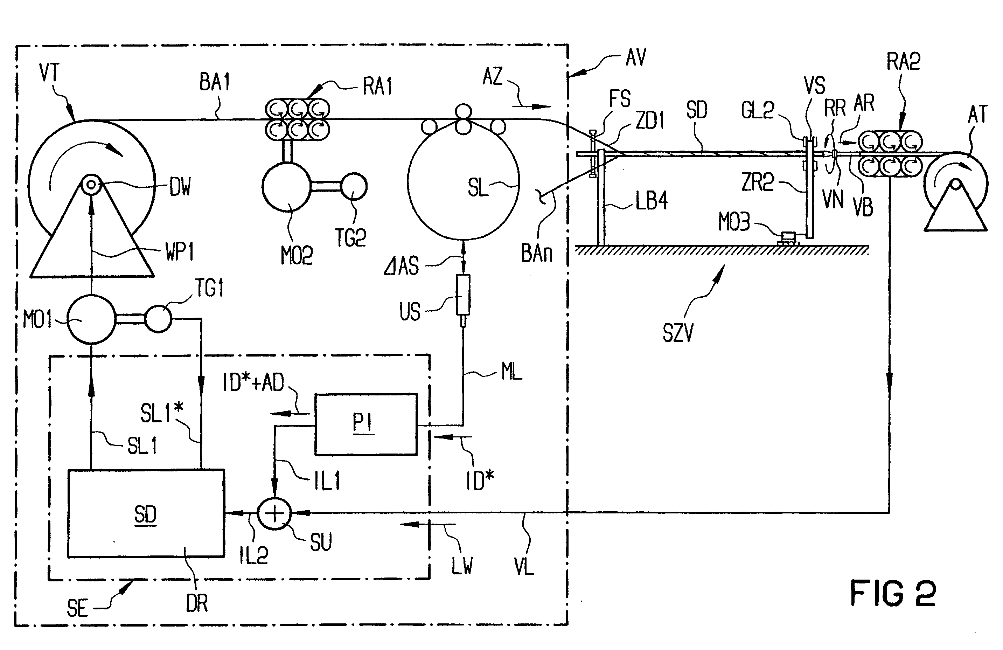

Figur 2 zeigt in schematischer Längsbilddarstellung die Abwickelvorrichtung AV von Figur 1 mit zugehörigem Regelschema sowie einer nachgeordneten Verseileinrichtung SZV, der die abgewickelte, langgestreckte Ader BA1 zugeführt wird. Die Steuereinrichtung SE weist einen Drehzahlregler DR auf, der über die Steuerleitung SL1 an die Antriebseinrichtung MO1 für die Vorratsspule VT angekoppelt ist. Der Antriebseinrichtung MO1 ist ein sogenannter Tachogenerator TG1 zugeordnet, der über eine Rückkoppelleitung SL1* dem Drehzahlregler DR den aktuell erreichten Ist- Drehzahlwert zurückliefert. Der Drehzahlregler DR vergleicht daraufhin diesen Ist-Drehzahlwert mit einem einzustellenden, gewünschten Soll-Drehzahlwert SD und regelt auf diesen die Antriebseinrichtung MO1 fortlaufend ein. Daß die Antriebseinrichtung MO1 mit der Drehwelle DW der Vorratsspule VT in Wirkverbindung steht, ist in der Figur 2 durch einen Wirkpfeil WP1 angedeutet.

Im Unterschied zur Drehzahlregelung der Antriebseinrichtung MO1 ist für die Abzugseinrichtung RA1 ein Motor MO2 mit zugehörigem Tachogenerator TG2 vorgesehen, für den ein konstantes Drehmoment eingestellt ist. Dadurch übt die Abzugseinrichtung RA1 auf die Ader BA1 stets eine solche Zugspannungskraft aus, daß die Ader BA1 auf ihrem Laufweg AW1 zwischen der Vorratsspule VT und der Abzugseinrichtung RA1 stets straff gespannt verbleibt. Eine Regelung des Motors MO2 ist dabei durch die Steuereinrichtung SE nicht erforderlich.

Mit Hilfe des Meßfühlers US werden Abstandsveränderungen ΔAS der Schlaufe SL gegenüber dem Meßfühler US gemessen und als Maß für die Durchmesserveränderung der Schlaufe SL herangezogen. Der Meßfühler US steht dabei über die Meßleitung ML mit der Steuereinrichtung SE in Verbindung. Die vom Meßfühler US erzeugten Meßsignale ID* werden über die Meßleitung ML einem Regler PI, insbesondere einem sogenannten Proportional-Integral- Regler zugeführt. Dieser Regler PI vergleicht den jeweilig aufgenommenen Ist-Meßwert ID* für den Schlaufendurchmesser mit dem vorgegebenen Soll-Schlaufendurchmesserwert D und erzeugt gegebenenfalls ein Regelsignal ΔD, um diesen gewünschten Sollwert D für den Schlaufendurchmesser durch entsprechende Regelung der Rotationsgeschwindigkeit bzw. Drehzahl der Vorratsspule VT konstant beibehalten zu können. Der Regler PI sendet dazu das entsprechend korrigierte Stellsignal ID* + ΔD über eine Leitung IL1 an einen Addierer SU. Diesem Addierer SU wird über eine Verbindungsleitung VL als weitere Eingangsgröße die Abzugsgeschwindigkeit der Abzugseinrichtung RA2 am Ausgang der nachgeordneten Verseilvorrichtung SZV zugeführt. Dieser Linienleitwert aufaddiert mit dem korrigierten Stellsignal ID* + ΔD wird über die Leitung IL2 dem Drehzahlregler IR als Sollgröße zugeführt,die ein Maß für die einzustellende Soll-Drehzahl SD ist.

Steigt die Abzugsgeschwindigkeit der Ader BA1 aufgrund des Verseilvorgangs der Verseileinrichtung SZV an, so verkleinert sich der Schlaufendurchmesser. Um wieder denselben Schlaufendurchmesser D zu erreichen und damit möglichst keine Zugspannung in der Ader BA1 entlang deren Abtransportweg AW2 zu haben, erhöht die Steuereinrichtung SE die Drehzahl des Motors MO1 und damit der Vorratsspule VT derart, daß entsprechend mehr Lauflänge der Ader BA1 von der Vorratsspule VT abläuft und der Schlaufenspeicher SL wieder mit genügend Vorratslänge gefüllt wird. Sinkt umgekehrt die Abzugsgeschwindigkeit der Ader aufgrund des Verseilvorgangs, so nimmt der Schlaufendurchmesser der Schlaufe SL zu, was wiederum durch den Meßfühler US registriert wird. Dessen Meßsignale ID* werden an den Regler PI der Steuereinrichtung SE weitergegeben. Der Regler PI erzeugt daraufhin eine Regelgröße ID* + ΔD, mit deren Hilfe der Drehzahlregler DR angewiesen wird, die Drehzahl der Vorratsspule VT entsprechend zu erniedrigen, so daß weniger Lauflänge der Ader BA1 von der Vorratsspule VT abläuft. Dadurch wird die Speicherlänge der Schlaufe SL entsprechend verkürzt und somit wieder der ursprüngliche Schlaufendurchmesser D eingeregelt.

Bei diesem Regelkonzept schiebt die Abzugseinrichtung RA1 mit konstantem Drehmoment Lauflänge der Ader in den durch die Schlaufe SL gebildeten Speicher. Sie dient lediglich dem Zweck, die Ader BA1 auf ihrem Laufweg AW1 unmittelbar hinter der Vorratsspule VT straff zu halten, so daß sie dort nicht durchhängen kann. Dadurch ist in zuverlässiger Weise einer Knäuelbildung der Ader entgegengewirkt.

Der Regler PI kann zweckmäßigerweise derart ausgelegt sein, daß er erst reagiert, wenn eine obere Grenze für die Schlaufendurchmesserveränderung überschritten wird. Dadurch spricht die Schlaufenregelung nicht auf sehr kurze Geschwindigkeitsschwankungen der Ader auf ihrem Laufweg AW2 an. Diese werden vorzugsweise allein durch kleine, vernachlässigbare Durchmesserveränderungen der Schlaufe SL ausgeglichen. Sehr schnelle, ruckartige, d.h. kurzzeitige Geschwindigkeitsänderungen der Ader werden bei dieser Reglerkonzeption also durch den Regler PI vorzugsweise nicht in Drehzahländerungen der Vorratsspule VT umgesetzt.

In der Figur 2 wird die optische Ader BA1 nach Durchlaufen des Schlaufenspeichers, hier gebildet durch die einzelne Schlaufe SL, der Verseileinrichtung SZV zugeführt. Diese Verseilvorrichtung SZV ist insbesondere als SZ-Verseilmaschine ausgebildet. Sie weist einen langgestreckten, geradlinig verlaufenden Speicherkörper SD, insbesondere ein zylindrisches Rohr auf, das in wechselnde Drehrichtung versetzt wird (SZ-Verseilung). Dadurch kommt es zu einer Umschlingung des jeweiligen Verseilelementes am Außenumfang, d.h. auf der glatten Oberfläche des geradlinig verlaufenden Speicherkörpers SD. Der Speicherkörper SD ist drehbar in einer feststehenden Einlaufvorrichtung FS gelagert. Natürlich können auch weitere - hier nicht näher dargestellte - Lager vorgesehen sein. Der Einfachheit halber ist entlang dem Verlauf des Speicherkörpers SD nur die optische Ader BA1 dargestellt. Für die anderen Verseilelemente, d.h. weiteren optischen Adern BA2 mit BAn, die entsprechend der optischen Ader BA1 von analog aufgebauten Abwickelvorrichtungen der Verseileinrichtung SZV zugeführt werden, gilt natürlich sinngemäß dieselbe Art von Umschlingung. Am ausgangsseitigen, rechten Ende des Speicherkörpers SD ist eine Verseilscheibe VS vorgesehen, die dort auf dem Speicherkörper SD fest aufsitzt. Die Verseilscheibe VS ist über einen Zahnriemen ZR2 mit Hilfe eines Motors MO3 angetrieben. Auf diese Weise ist die Verseilscheibe VS synchron zum Speicherkörper SD in Rotation versetzt. Die Verseilscheibe VS weist eine Reihe von Bohrungen in der Art eines Lochkranzes auf, in denen jeweils einzeln die Verseilelemente, hier optischen Adern BA1 mit BAn geführt sind. Nach dem Verlassen des Speicherkörpers SD gelangen die optischen Adern zu einem Verseilnippel VN. In diesem Verseilnippel VN werden die optischen Adern, d.h. allgemein ausgedrückt Verseilelemente zu einem Bündel VB zusammengefaßt und in Abzugsrichtung AR ggf. weiteren, hier nicht dargestellten Verarbeitungseinrichtung wie z.B. einem Haltewendelspinner zugeführt. Das derart gefertigte Verseilprodukt wird schließlich mit Hilfe einer Abzugseinrichtung RA2, insbesondere einem Raupenbandabzug gefaßt, der den eigentlichen Vorwärtstransport der Verseilelemente über den Speicherkörper SD bewirkt. Anschließend wird das derartig vorwärts transportierte Verseilprodukt auf eine Vorratsspule AT oder einem Teller aufgewickelt und dort vorrätig gehalten.

Bei der oszillierenden Drehbewegung des Speicherkörpers SD ist dieser abwechselnd mit einer maximalen Anzahl von Umschlingungen der Verseilelemente schraubenlinienförmig umwickelt und dann wieder lediglich mit parallel zu seiner Längserstreckung verlaufenden Verseilelementen belegt. Dadurch werden die Verseilelemente, hier die optischen Adern BA1 mit BAn, mit unterschiedlichen Abzugsgeschwindigkeiten der SZ-Verseileinrichtung SZV eingangsseitig zugeführt. Diese Geschwindigkeitsschwankungen werden mit Hilfe des erfindungsgemäßen Schlaufenspeichers SL in vorteilhafter Weise ausgeglichen. Insbesondere kann durch den Schlaufenspeicher SL eine Entkopplung zwischen dem Abwickelvorgang von der Ablagevorrichtung wie z.B. VT des jeweiligen Verseilelements wie z.B. BA1 und dessen Verseilvorgang erreicht werden.

Durch fortlaufende Kontrolle und Auswertung der Schlaufengeometrie während des Abwickelvorgangs ist es also möglich,ein Steuerkriterium zur Steuerung oder Regelung der Abtransportgeschwindigkeit der Ader auf deren Laufweg AW2 abzuleiten. Dazu kann die Steuereinrichtung SE zusätzlich oder unabhängig zur Regulierung der Rotationsgeschwindigkeit der Vorratsspule VT über die Steuerleitung SL1 gegebenenfalls über eine entsprechende, weitere Steuerleitung (die hier in Figur 2 der Übersichtlichkeit halber weggelassen worden ist), auch die ausgangsseitige Abzugseinrichtung RA2 der nachfolgenden Verseilvorrichtung SZV ansteuern.

Zusätzlich oder unabhängig von der Drehzahlregelung der Ablagevorrichtung für das jeweilige Nachrichtenkabelelement kann es gegebenenfalls auch zweckmäßig sein, die Abzugseinrichtung RA1, die der Ablagevorrichtung VT nachgeordnet ist, drehzahlmäßig zu regeln. Dies ist insbesondere dann von Vorteil, wenn für die Ablagevorrichtung VT ein Ablageteller verwendet ist. Für den Teller wird dabei zweckmäßigerweise ein konstantes Drehmoment eingestellt.

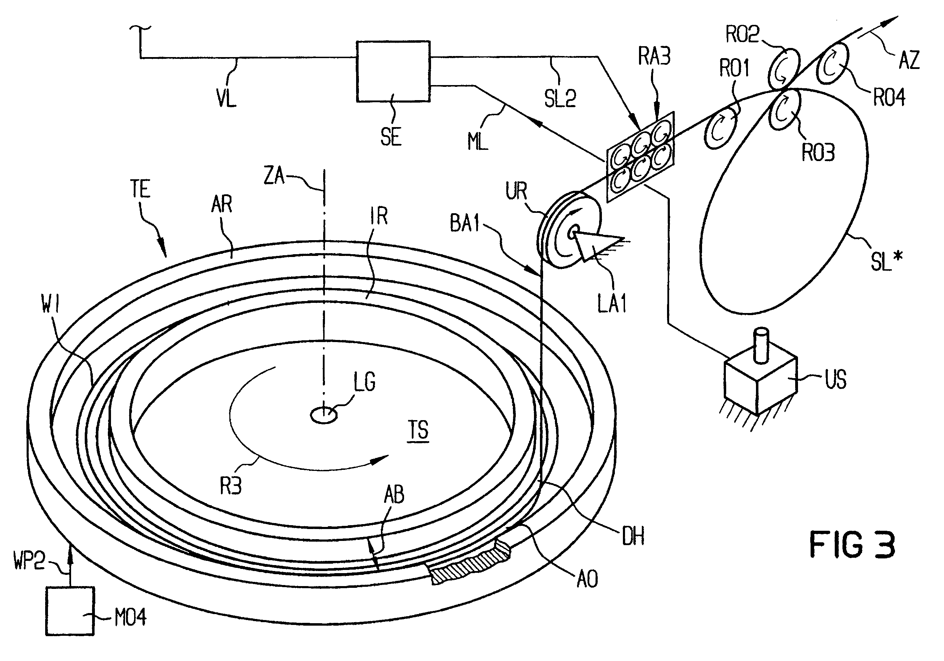

Figur 3 zeigt einen derartigen Teller TE als Ablagevorrichtung für die optische Ader BA1 schematisch in perspektivischer Darstellung. Der Teller TE ist kreisscheibenförmig ausgebildet. Mit Hilfe eines Lagers LG in seinem Zentrum ist er drehbar um die strichpunktiert angedeutete Drehachse ZA aufgehängt, die als Flächennormale im wesentlichen senkrecht zu seiner Lageebene durch sein Zentrum verläuft. Der Teller TE ist derart räumlich aufgehängt, daß sein Ablagebereich für die Lichtwellenleiterader BA1 im wesentlichen eine horizontale, d.h. waagerechte Ablageebene bildet. Die einzelnen Windungen bzw. Schlaufen der Lichtwellenleiterader BA1 sind in Form einer torusförmigen Anordnung auf der Oberseite des Tellers TE als Wickelpaket niedergelegt, d.h. die Lichtwellenleiterader BA1 ist mit Hilfe einer Vielzahl von annäherungsweise kreisringförmigen Windungen in einem torusförmigen Ablagebereich des Tellers TE abgelegt. Der torusförmige Ablagebereich AB für die Lichtwellenleiterader BA1 ist nach außen hin durch einen äußeren, kreisringförmigen Tellerrand AR begrenzt. Dieser äußere Tellerrand steht senkrecht zur horizontalen Lageebene des Tellers TE nach oben hin ab. Dadurch kann ein Herabfallen von einzelnen Umwindungen der Lichtwellenleiterader BA vom Teller TE weitgehend vermieden werden. Entsprechend dazu ist der Ablagebereich AB radial nach innen hin durch einen inneren, kreisringförmigen Tellerrand IR begrenzt, der ebenfalls senkrecht zur Ablageebene nach oben absteht. Auf diese Weise ist zwischen dem inneren und äußeren Tellerrand IR, AR der seitlich eingefaßte, ring- bzw. torusförmige Ablagebereich AB gebildet.

Zum Abwickeln der Ader BA1 vom Teller TE wird die Ader BA1 derart frei beweglich sowie locker aus dem Teller TE herausgenommen, daß sich für sie ein Durchhang DH einstellt. In der Figur 3 wird dazu die Ader vom Wickelpaket am Umfangsort AO abgehoben und nach oben zu einer räumlich entfernten, höher gelegenen Führungsvorrichtung, insbesondere einer Umlenkrolle UR herausgeführt. Die Umlenkrolle UR ist dabei in einem Lager LA1 drehbar gelagert. Durch das Eigengewicht der Ader BA1 stellt sich dabei für diese zwischen ihrem Abhebeort AO auf der Oberseite des Tellers TE und der Umlenkrolle UR selbsttätig ein bestimmter Durchhang DH ein. Der Teller TE wird mit Hilfe einer Antriebseinrichtung MO4, insbesondere einem Motor, in Rotation versetzt. Dies ist mit Hilfe eines Wirkpfeils WP2 angedeutet. Für den Motor MO4 ist dabei insbesondere ein weitgehend konstantes Drehmoment oder eine feste Drehgeschwindigkeit eingestellt. Zum Abziehen der Ader aus dem Teller TE ist der drehbar gelagerten Umlenkrolle UR eine Abzugseinrichtung RA3, insbesondere ein Bandabzug oder Raupenbandabzug nachgeordnet.

Nach der Abzugseinrichtung RA3 wird die Ader BA1 mit Hilfe ein oder mehrerer Umlenkrollen RO1 mit RO4 zu einer Schlaufe SL* analog zur Schlaufe SL von Figur 1 herumgeführt. Diese Schlaufe SL* hängt frei durch. Sie ist vorzugsweise kreisringförmig ausgebildet. Ihre Krümmungsrichtung wird vorzugsweise gleich der Biegerichtung der Ader auf dem Teller TE gewählt. Insbesondere wird ihr Außendurchmesser in erster Näherung etwa gleich dem Durchmesser der jeweiligen Aderwindung auf dem Teller TE gewählt. Die Ader wird zur Schlaufenbildung SL mit Hilfe von Umlenkrollen RO1* mit RO4* aus ihrem ursprünglichen Abzugsweg von der Abzugseinrichtung RA3 kommend, der hier geradlinig verläuft, um etwa 360° umgelenkt. Nach Durchlaufen der Schlaufe SL wird die Ader wiederum im wesentlichen geradlinig in Abzugstransportrichtung AZ vorwärtstransportiert.

Um die Ader BA1 weitgehend zugspannungsarm nach der Abzugseinrichtung RA3 entlang ihrer axialen Längserstreckung vorwärtstransportieren zu können, wird vorzugsweise ein bestimmter Schlaufendurchmesser vorgegeben. Die Abzugsgeschwindigkeit der Abzugseinrichtung RA3 wird dann während des Abwickelprozesses fortlaufend derart eingestellt, daß sich von der ersten bis zur letzten abzuwickelnden Windung WI der Ader BA1 annäherungsweise stets etwa derselbe Schlaufendurchmesser ergibt. Zu diesem Zweck wird der jeweils aktuelle Außendurchmesser der Schlaufe SL* der Ader BA1 mit Hilfe des Meßfühlers US gemessen und als Steuerkriterium über die Meßleitung ML der Steuereinrichtung SE zur Steuerung der Abzugsgeschwindigkeit der Abzugseinrichtung RA3 übermittelt. Die Steuervorrichtung SV weist dabei über eine Steuerleitung SL2 die Abzugseinrichtung RA3 entsprechend an. Dadurch, daß die Abzugseinrichtung RA3 derart gesteuert oder geregelt wird, daß sich von der erten bis zur letzten abgewickelten Aderwindung, d.h. für alle Aderwindungen des Wickelpakets im wesentlichen dieselbe Geometrieform und Schlaufengröße, insbesondere derselbe Außendurchmesser der Schlaufe SL* einstellt, ist es ermöglicht, die Ader nach der Abzugseinrichtung RA3 weitgehend zugspannungsarm weiteren Fertigungseinrichtungen zuzuführen, die hier in der Figur 3 der zeichnerischen Übersichtlichkeit halber weggelassen worden sind.

Zugleich kann dabei auch sichergestellt werden, daß die Ader weitgehend stauchungsarm verbleibt. Dadurch bleibt das zuvor während des Herstellungsprozesses definiert eingestellte Längenverhältnis zwischen Aderhülle und Lichtwellenleiter für die Lichtwellenleiterader auch nach dem Abwickeln von der Ablagevorrichtung weitgehend erhalten. Insbesondere kann weitgehend sichergestellt werden, daß eine beim Herstellungsprozess erzielte Überlänge des jeweiligen Lichtwellenleiters gegenüber der ihn umgebenden Aderhülle durch das Abwickeln der Ader nicht in unerwünschter Weise verringert oder gar ganz beseitigt wird. Durch die freie Beweglichkeit der Schlaufe SL* kann deren Durchmesser sich stets frei, d.h. ungehindert einstellen. Dadurch wird weitgehend vermieden, daß die Ader beim Abwickelvorgang nicht durch zu kleine Biegeradien in unzulässigerweise biegebeansprucht wird. Für die durchhängende vollkreisförmige Schlaufe wird zweckmäßigerweise ein Biegeradius eingehalten, der mindestens dem 30-fachen des Aderdurchmessers entspricht, insbesondere zwischen dem 40- und 50-fachen des Aderdurchmessers liegt. Da sich die kreisringförmige Schlaufe frei einstellen kann und frei durchhängt, sowie ihre Schlaufengeometrie berührungslos gemessen werden kann, ist keine Mechanik vorhanden, die auf die Ader bei ihrer Herausnahme aus der Ablagevorrichtung und ihre Abwickelbewegung in unerwünschter Weise einwirkt. Dadurch kann die Ader von ihrer Ablagevorrichtung weitgehend reibungsarm abgewickelt werden. Das Meßsystem verbleibt zudem weitgehend verschleißarm. Auch verbleibt das Meß- und Regelsystem zur Steuerung der Transportgeschwindigkeit der Ader weitgehend frei von Fremdträgheit, d.h. es ergeben sich kurze Reaktionszeiten für das Meß- und Regelsystem, so daß eine hohe Meßdynamik erreicht werden kann. Da die Messung des Durchhangs vorzugsweise berührungslos erfolgt, ist die Messung darüber hinaus in vorteilhafter Weise unabhängig von Adereigenschaften wie z.B. Aderdurchmesser, Adergewicht, Adersteifigkeit oder Aderoberfläche.

Durch die Messung der Schlaufengeometrie ist es zugleich in vorteilhafter Weise ermöglicht, auch Störungen im Ablaufvorgang der Ader wie z.B. störende Dickstellen oder sonstige Inhomogenitäten in der Geometrieform der Ader zu erkennen. Wird beispielsweise der Abstand der Schlaufe wie z.B. SL* bzw. SL zum Meßfühler US zu groß, d.h. überschreitet er einen oberen Grenzwert, so kann insbesondere darauf geschlossen werden, daß sich die Ader irgendwo auf ihrem Teller bzw. ihrer Vorratsspule oder in einer nachfolgenden Weiterverarbeitungsvorrichtung verhakt hat. Daraufhin kann die Fertigungslinie in vorteilhafter Weise ggf. sofort abgeschaltet werden. Wird überhaupt kein Abstand zwischen Ader und Meßfühler mehr gemessen, so kann insbesondere darauf geschlossen werden, daß die Ader vom Teller vollständig abgewickelt worden ist.

Im Rahmen der Erfindung wird unter dem Begriff Lichtwellenleiterader vorzugsweise eine optische Ader verstanden, in deren Aderhülle entweder lediglich ein einzelner Lichtwellenleiter (Hohlader) oder aber eine Vielzahl von Lichtwellenleitern lose, d.h. im wesentlichen frei beweglich bzw. mit Spiel, untergebracht sein kann (Bündelader). Für die Aderhülle kann vorzugsweise ein extrudierter Kunststoff verwendet sein. Das erfindungsgemäße Abwickelverfahren läßt sich in genauso vorteilhafter Weise für einen einzelnen Lichtwellenleiter, Lichtwellenleiterbändchen oder sonstige optische Übertragungselemente verwenden.

Weiterhin eignet sich das erfindungsgemäße Abwickelprinzip auch zum Abwickeln sonstiger, mechanisch empfindlicher, insbesondere zugspannungsempfindlicher Wickelgüter der Kabeltechnik wie z.B. elektrische Leiter, Wickelfäden, Haltewendeln oder dergleichen.

Neben den zu den Figuren 1 mit 3 vorgestellten Anordnungen von Ablagevorrichtung, Führungsvorrichtung und Schlaufenspeicher sind selbstverständlich auch andere Aufbauten möglich, solange sichergestellt ist, daß mindestens eine Schlaufe des abzuwickelnden Nachrichtenkabelelementes frei beweglich ausgelegt werden kann.

Die Erfindung zeichnet sich vor allem dadurch aus, daß eine Abzugsregelung selbst dann noch möglich ist, wenn ein langgestrecktes Gut mit hoher Eigensteifigkeit abgewickelt werden soll. Geschwindigkeitsschwankungen durch weiterverarbeitete Maschinen wie z.B. einer SZ-Verseilmaschine können durch den Schlaufenspeicher in vorteilhafter Weise kompensiert werden. Der Schlaufenspeicher ermöglicht dabei eine Entkopplung der Abwickelbewegung von nachfolgenden Weiterverarbeitungsprozessen. Es sind insbesondere hohe Abwickelgeschwindigkeiten ermöglicht. Die Beobachtung der Schlaufengeometrie ermöglicht in vorteilhafter Weise ein schnelles Ansprechverhalten des Regel- bzw. Steuerungssystems für die Abtransportbewegung des langgestreckten Guts.

## Patentansprüche

1. Verfahren zum Abwickeln eines langgestreckten Nachrichtenkabelelements (BA1) von einer Ablagevorrichtung (VT), auf der das Nachrichtenkabelelement (BA1) mit einer Vielzahl von Windungen abgelegt ist, wobei das langgestreckte Nachrichtenkabelelement (BA1) derart von der Ablagevorrichtung (VT) in axialer Richtung (AZ) abtransportiert wird, daß mindestens eine geschlossene Schlaufe (SL) an mindestens einer Längsstelle seines Längs-Abtransportswegs (AW1 + AW2) gebildet wird, wobei die Schlaufe (SL) mit derselben Krümmungsrichtung gebildet wird, die die auf der Ablagevorrichtung (VT) abgelegten Windungen des langgestreckten Nachrichtenkabelelements (BA1) aufweisen, wobei Veränderungen (ΔAS) der Geometrieform der Schlaufe (SL) mittels berührungsloser Messung fortlaufend erfaßt werden und wobei aus diesen Veränderungen der Geometrieform (ΔAS) mindestens ein Steuerkriterium für die Abtransportbewegung des langgestreckten Kabelelements (BA1) abgeleitet wird.

2. Verfahren nach Anspruch 1
**dadurch gekennzeichnet,**
**daß** die Schlaufe (SL) im wesentlichen als Kreisring ausgelegt wird.

3. Verfahren nach einem der vorhergehenden Ansprüche,
**dadurch gekennzeichnet,**
**daß** die Schlaufe (SL) möglichst frei beweglich ausgelegt wird.

4. Verfahren nach einem der vorhergehenden Ansprüche,
**dadurch gekennzeichnet,**
**daß** die Schlaufe (SL) mit derselben Krümmungsrichtung ausgelegt wird, wie das Nachrichtenkabelelement (BA1) auf die Ablagevorrichtung (VT) aufgewickelt worden war.

5. Verfahren nach einem der vorhergehenden Ansprüche,
**dadurch gekennzeichnet,**
**daß** der Durchmesser der Schlaufe (SL) annäherungsweise dem Wickeldurchmesser der Windungen des Nachrichtenkabelelements (BA1) gewählt wird.

6. Verfahren nach einem der vorhergehenden Ansprüche,
**dadurch gekennzeichnet,**
**daß** die Abtransportbewegung des Nachrichtenkabelelements (BA1) derart durchgeführt wird, daß ein vorgegebener Durchmesser (D) der Schlaufe (SL) stets weitgehend konstant beihalten wird.

7. Verfahren nach einem der vorhergehenden Ansprüche,
**dadurch gekennzeichnet,**
**daß** die Schlaufe (SL) vertikal ausgelegt wird.

8. Verfahren nach einem der Ansprüche 1 bis 6,
**dadurch gekennzeichnet,**
**daß** die Schlaufe (SL) horizontal ausgelegt wird.

9. Verfahren nach einem der vorhergehenden Ansprüche,
**dadurch gekennzeichnet,**
**daß** als Steuerkriterium die Veränderung des Durchmessers (D) der Schlaufe (SL) gemessen wird.

10. Verfahren nach einem der vorhergehenden Ansprüche,
**dadurch gekennzeichnet,**
**daß** als Steuerkriterium die Abstandsveränderung (ΔAS) der Schlaufe von einem berührungslosen Meßfühler (US) gemessen wird.

11. Verfahren nach einem der vorhergehenden Ansprüche,
**dadurch gekennzeichnet**
**daß** die Ablagevorrichtung (VT) rotierend angetrieben wird.

12. Verfahren nach einem der vorhergehenden Ansprüche,
**dadurch gekennzeichnet,**
**daß** aufgrund des Steuerkriteriums die Drehzahl der Ablagevorrichtung (VT) gesteuert oder geregelt wird.

13. Verfahren nach einem der vorhergehenden Ansprüche,
**dadurch gekennzeichnet,**
**daß** aufgrund des Steuerkriteriums die Abzugsgeschwindigkeit des Nachrichtenkabelelements (BA1) gesteuert oder geregelt wird.

14. Verfahren nach einem der vorhergehenden Ansprüche,
**dadurch gekennzeichnet,**
**daß** das Nachrichtenkabelelement (BA1) im wesentlichen geradlinig von der Ablagevorrichtung (VT) abtransportiert wird.

15. Verfahren nach einem der vorhergehenden Ansprüche,
**dadurch gekennzeichnet,**
**daß** das Nachrichtenkabelelement (BA1) nach Durchlaufen der Schlaufe (SL) einer Weiterverarbeitungsvorrichtung (SZV) zugeführt wird.

16. Verfahren nach einem der vorhergehenden Ansprüche,
**dadurch gekennzeichnet,**
**daß** der Durchmesser (D) der Schlaufe (SL) so groß gewählt wird, daß Änderungen der Abzugsgeschwindigkeit des Nachrichtenkabelelements (BA1), die bei Blickrichtung in seine Abtransportrichtung (AZ) von mindestens einer Verarbeitungsvorrichtung hinter der Schlaufe(SL) verursacht werden, längenmäßig weitgehend kompensiert werden.

17. Verfahren nach einem der vorhergehenden Ansprüche,
**dadurch gekennzeichnet,**
**daß** das Nachrichtenkabelelement (BA1) unter Zuhilfenahme mindestens eines Hilfsabzugs (RA1) auf die Schlaufe (SL) zugeschoben wird.

18. Verfahren nach Anspruch 17,
**dadurch gekennzeichnet,**
**daß** der Hilfsabzug (RA) zwischen der Ablagevorrichtung (VT) und der Schlaufe (SL) derart betrieben wird, daß das Nachrichtenkabelelement (BA1) nach dem Hilfsabzug (RA1) weitgehend zugspannungsarm vorwärtstransportiert wird.

19. Verfahren nach einem der vorhergehenden Ansprüche,
**dadurch gekennzeichnet,**
**daß** als langgestrecktes Nachrichtenkabelelement ein optisches Übertragungselement (BA1) verwendet wird.

20. Vorrichtung zum Abwickeln eines langgestreckten Nachrichtenkabelelements (BA1) von seiner Ablagevorrichtung (VT), auf der das Nachrichtenkabelelement (BA1) mit einer Vielzahl von Windungen abgelegt ist, insbesondere nach einem der vorhergehenden Ansprüche, wobei das Abtransportmittel (RA, RO1, ... RO4, MO1) zum Abtransport des langgestreckten Nachrichtenkabelelements (BA1) von seiner Ablagevorrichtung (VT) in axialer Richtung (AZ) derart vorgesehen sind, daß mindestens eine geschlossene Schlaufe (SL) des Nachrichtenkabelelements (BA1) an mindestens einer Längsstelle dessen Längs-Abtransportwegs (AW) ausbildbar ist, wobei die Schlaufe (SL) mit derselben Krümmungsrichtung ausbildbar ist, die die auf der Ablagevorrichtung (VT) abgelegten Windungen des langgestreckten Nachrichtenkabelelements (BA1) aufweisen, wobei eine Meßvorrichtung (US) zum fortlaufend berührungslosen Messen von Veränderungen (ΔAS) der Geometrieform der Schlaufe (SL) vorgesehen ist und wobei dieser Meßvorrichtung (US) eine Steuervorrichtung (SE) zugeordnet ist, die aus diesen Veränderungen (ΔAS) mindestens ein Steuerkriterium für die Abtransportbewegung des langgestreckten Nachrichtenkabelelements (BA1) ableitet.

21. Vorrichtung nach Anspruch 20,
**dadurch gekennzeichnet,**
**daß** als Meßvorrichtung (US) ein Ultraschallsensor vorgesehen ist.

22. Vorrichtung nach einem der Ansprüche 20 oder 21,
**dadurch gekennzeichnet,**
**daß** die Ablagevorrichtung (VT) durch einen horizontal liegenden, drehbaren Teller gebildet ist.

23. Vorrichtung nach einem der Ansprüche 20 oder 21,
**dadurch gekennzeichnet,**
**daß** die Ablagevorrichtung (VT) durch eine Vorratsspule gebildet ist, auf deren kreiszylindrischen Spulenkörper das Nachrichtenkabelelement (BA1) aufgewickelt ist.

24. Vorrichtung nach einem der Ansprüche 20 bis 23,
**dadurch gekennzeichnet,**
**daß** die Steuervorrichtung (SE) in Wirkverbindung mit mindestens einer Antriebsvorrichtung (MO1) für die Ablagevorrichtung (VT) und/oder mindestens einer Abzugsvorrichtung (RA) zum Vorwärtstransport des Nachrichtenkabelelements (BA1) steht.

25. Vorrichtung nach einem der Ansprüche 20 mit 24,
**dadurch gekennzeichnet,**
**daß** die Abtransportmittel mindestens eine Führungsvorrichtung (FV) aufweisen, mit deren Hilfe das Nachrichtenkabelelement (BA1) zu der jeweiligen Schlaufe (SL) legbar ist.

26. Vorrichtung nach Anspruch 25,
**dadurch gekennzeichnet,**
**daß** die Führungsvorrichtung (FV) durch mindestens eine drehbar gelagerte Rolle (RO1 mit RO4) gebildet ist.

27. Vorrichtung nach einem der Ansprüche 20 mit 26,
**dadurch gekennzeichnet,**
**daß** in Abtransportrichtung (AZ) betrachtet der Ablagevorrichtng (VT) eine Abzugsvorrichtung (RA1) nachgeordnet ist, die das Nachrichtenkabelelement (BA1) der nachgeordneten Schlaufe (SL) zuschiebt.

28. Vorrichtung nach einem der Ansprüche 20 mit 27,
**dadurch gekennzeichnet,**
**daß** die Schlaufe (SL) frei beweglich ausgelegt ist.

29. Vorrichtung nach einem der Ansprüche 20 mit 28,
**dadurch gekennzeichnet,**
**daß** das langgestreckte Nachrichtenkabelelement, ein optisches Übertragungselement (BA1) ist.

30. Vorrichtung nach einem der Ansprüche 20 mit 29,
**dadurch gekennzeichnet,**
**daß** die Abtransportmittel (MO1, RA, FV) mit der Steuervorrichtung (SE) derart in Wirkverbindung stehen, daß ein vorgegebener Durchmesser (D) der Schlaufe (SL) stets weitgehend konstant beibehaltbar ist.

31. Vorrichtung nach einem der Ansprüche 20 mit 30,
**dadurch gekennzeichnet,**
**daß** das Nachrichtenkabelelement (BA1) nach Durchlaufen der Schlaufe (SL) einer Weiterverarbeitungsvorrichtung (SZV) zugeführt ist.

## Claims

1. Method of unwinding an elongated telecommunication cable element (BA1) from a storage device (VT), on which the telecommunication cable element (BA1) is stored with a large number of turns, the elongated telecommunication cable element (BA1) being transported away in the axial direction (AZ) from the storage device (VT) in such a way that at least one closed loop (SL) is formed at at least one longitudinal point on its longitudinal outward transport path (AW1+AW2), the loop (SL) being formed with the same direction of curvature as the turns of the elongated telecommunication cable element (BA1) stored on the storage device (VT), changes (ΔAS) in the geometric shape of the loop (SL) being continuously registered by means of non-contact measurement, and these changes (ΔAS) in the geometric shape being used to derive at least one control criterion for the outward transport movement of the elongated telecommunication cable element (BA1).

2. Method according to Claim 1, **characterized in that** the loop (SL) is paid out essentially as a circular ring.

3. Method according to one of the preceding claims, **characterized in that** the loop (SL) is paid out so as to be as freely mobile as possible.

4. Method according to one of the preceding claims, **characterized in that** the loop (SL) is paid out with the same direction of curvature as that with which the telecommunication cable element (BA1) was wound onto the storage device (VT).

5. Method according to one of the preceding claims, **characterized in that** the diameter of the loop (SL) is selected to be approximately equal to the winding diameter of the turns of the telecommunication cable element (BA1).

6. Method according to one of the preceding claims, **characterized in that** the outward transport movement of the telecommunication cable element (BA1) is carried out in such a way that a predefined diameter (D) of the loop (SL) is always kept largely constant.

7. Method according to one of the preceding claims, **characterized in that** the loop (SL) is paid out vertically.

8. Method according to one of Claims 1 to 6, **characterized in that** the loop (SL) is paid out horizontally.

9. Method according to one of the preceding claims, **characterized in that**, as the control criterion, the change in the diameter (D) of the loop (SL) is measured.

10. Method according to one of the preceding claims, **characterized in that**, as the control criterion, the change in the distance (ΔAS) of the loop from a non-contact measuring sensor (US) is measured.

11. Method according to one of the preceding claims, **characterized in that** the storage device (VT) is driven in rotation.

12. Method according to one of the preceding claims, **characterized in that** the rotational speed of the storage device (VT) is controlled or regulated on the basis of the control criterion.

13. Method according to one of the preceding claims, **characterized in that** the haul-off speed of the telecommunication cable element (BA1) is controlled or regulated on the basis of the control criterion.

14. Method according to one of the preceding claims, **characterized in that** the telecommunication cable element (BA1) is transported essentially rectilinearly away from the storage device (VT).

15. Method according to one of the preceding claims, **characterized in that**, after passing through the loop (SL), the telecommunication cable element (BA1) is fed to a further processing device (SZV).

16. Method according to one of the preceding claims, **characterized in that** the diameter (D) of the loop (SL) is selected to be sufficiently large that changes in the haul-off speed of the telecommunication cable element (BA1), which are caused by at least one processing device downstream of the loop (SL), as viewed in its outward transport direction (AZ), are largely compensated for in terms of length.

17. Method according to one of the preceding claims, **characterized in that** the telecommunication cable element (BA1) is pushed onto the loop (SL) with the aid of at least one auxiliary haul-off (RA1).

18. Method according to Claim 17, **characterized in that** the auxiliary haul-off (RA) between the storage device (VT) and the loop (SL) is operated in such a way that, downstream of the auxiliary haul-off (RA1), the telecommunication cable element (BA1) is transported forwards largely with a low tensile stress.

19. Method according to one of the preceding claims, **characterized in that** the elongated telecommunication cable element used is an optical transmission element (BA1).

20. Apparatus for unwinding an elongated telecommunication cable element (BA1) from its storage device (VT), on which the telecommunication cable element (BA1) is stored with a large number of turns, in particular according to one of the preceding claims, the outward transport means (RA, RO1 to RO4, MO1) for transporting the elongated telecommunication cable element (BA1) away from its storage device (VT) in the axial direction (AZ) being provided in such a way that at least one closed loop (SL) of the telecommunication cable element (BA1) can be formed at at least one longitudinal point in its longitudinal outward transport path (AW), it being possible for the loop (SL) to be formed with the same direction of curvature as the turns of the elongated telecommunication cable element (BA1) stored on the storage device (VT), a measuring device (US) for continuously measuring changes (ΔAS) in the geometric shape of the loop (SL) without contact being provided, and this measuring device (US) being assigned a control device (SE) which uses these changes (ΔAS) to derive at least one control criterion for the outward transport movement of the elongated telecommunication cable element (BA1).

21. Apparatus according to Claim 20, **characterized in that** the measuring device (US) provided is an ultrasonic sensor.

22. Apparatus according to either of Claims 20 and 21, **characterized in that** the storage device (VT) is formed by a horizontal, rotatable plate.

23. Apparatus according to either of Claims 20 and 21, **characterized in that** the storage device (VT) is formed by a supply coil, on whose circularly cylindrical coil former the telecommunication cable element (BA1) is wound.

24. Apparatus according to one of Claims 20 to 23, **characterized in that** the control device (SE) is operatively connected to at least one drive device (MO1) for the storage device (VT) and/or at least one haul-off device (RA) for the forward transport of the telecommunication cable element (BA1).

25. Apparatus according to one of Claims 20 to 24, **characterized in that** the outward transport means have at least one guide device (FV), with the aid of which the telecommunication cable element (BA1) can be laid to form the respective loop (SL).

26. Apparatus according to Claim 25, **characterized in that** the guide device (FV) is formed by at least one rotatably mounted roller (RO1 to RO4).

27. Apparatus according to one of Claims 20 to 26, **characterized in that**, as viewed in the outward transport direction (AZ), the storage device (VT) has a haul-off device (RA1) downstream, which pushes the telecommunication cable element (BA1) to the loop (SL) downstream.

28. Apparatus according to one of Claims 20 to 27, **characterized in that** the loop (SL) is paid out so as to be freely mobile.

29. Apparatus according to one of Claims 20 to 28, **characterized in that** the elongated telecommunication cable element is an optical transmission element (BA1).

30. Apparatus according to one of Claims 20 to 29, **characterized in that** the outward transport means (MO1, RA, FV) are operatively connected to the control device (SE) in such a way that a predefined diameter (D) of the loop (SL) can always be maintained largely constant.

31. Apparatus according to one of Claims 20 to 30, **characterized in that**, after passing through the loop (SL), the telecommunication cable element (BA1) is fed to a further processing device (SZV).

## Revendications

1. Procédé de déroulement d'un élément (BA1) de câble de télécommunication s'étendant en longueur d'un dispositif (VT) de dépôt, sur lequel l'élément (BA1) de câble de télécommunication est déposé en une pluralité de spires, dans lequel on transporte l'élément (BA1) de câble de télécommunication qui s'étend en longueur du dispositif (VT) de dépôt en direction (AZ) axiale, de façon à ce qu'au moins une boucle (SL) fermée soit formée dans la direction d'enroulement initiale du dispositif (VT) de dépôt en au moins un emplacement longitudinal de son trajet (AW1 + AW2) de transport longitudinal, la boucle (SL) ayant la même direction de courbure que celle que présentent les spires, déposées du dispositif (VT) de dépôt, de l'élément (BA1) de câble s'étendant en longueur, en ce que l'on relève des modifications (ΔAS) de la forme géométrique de la boucle (SL) au moyen de mesures sans contact et qu'à partir de ces modifications de la forme (ΔAS) géométrique, on déduit au moins un critère de commande pour le mouvement de transport de l'élément (BA1) de câble de télécommunications qui s'étend en longueur.

2. Procédé suivant la revendication 1, **caractérisé en ce que** la boucle (SL) est constituée sensiblement sous la forme d'un anneau de cercle.

3. Procédé suivant l'une quelconque des revendications précédentes, **caractérisé en ce que** la boucle (SL) est conçue de manière à être aussi librement mobile que possible.

4. Procédé suivant l'une quelconque des revendications précédentes, **caractérisé en ce que** la boucle (SL) est conçue en ayant la même direction de courbure que celle suivant laquelle l'élément (BA1) de câble de télécommunication a été enroulé sur le dispositif (VT) de dépôt.

5. Procédé suivant l'une quelconque des revendications précédentes, **caractérisé en ce que** le diamètre de la boucle (SL) est choisi approximativement égal au diamètre d'enroulement des spires de l'élément (BA1) de câble de télécommunication.

6. Procédé suivant l'une quelconque des revendications précédentes, **caractérisé en ce que** l'on effectue le mouvement de transport de l'élément (BA1) de câble de télécommunication de façon à maintenir toujours dans une grande mesure constant un diamètre, (D) prescrit de la boucle (SL).

7. Procédé suivant l'une quelconque des revendications précédentes, **caractérisé en ce que** la boucle (SL) est verticale.

8. Procédé suivant l'une des revendications 1 à 6, **caractérisé en ce que** la boucle (SL) est horizontale.

9. Procédé suivant l'une quelconque des revendications précédentes, **caractérisé en ce que** l'on mesure comme critère de commande la modification du diamètre (D) de la boucle (SL).

10. Procédé suivant l'une quelconque des revendications précédentes, **caractérisé en ce que** l'on mesure comme critère de commande la modification (ΔAS) de distance entre la boucle et une sonde (US) de mesure sans contact.

11. Procédé suivant l'une quelconque des revendications précédentes, **caractérisé en ce que** l'on entraîne en rotation le dispositif (VT) de dépôt.

12. Procédé suivant l'une quelconque des revendications précédentes, **caractérisé en ce que** l'on commande ou l'on règle la vitesse de rotation du dispositif (VT) de dépôt sur la base du critère de commande.

13. Procédé suivant l'une quelconque des revendications précédentes, **caractérisé en ce que** l'on commande ou l'on règle la vitesse de retrait de l'élément (BA1) de câble de télécommunication sur la base du critère de commande.

14. Procédé suivant l'une quelconque des revendications précédentes, **caractérisé en ce que** l'on transporte l'élément (BA1) de câble de télécommunication sensiblement en ligne droite à partir du dispositif (VT) de dépôt.

15. Procédé suivant l'une quelconque des revendications précédentes, **caractérisé en ce que** l'on envoie l'élément (BA1) de câble de télécommunication après passage de la boucle (SL) à un dispositif (SZV) de traitement ultérieur.

16. Procédé suivant l'une quelconque des revendications précédentes, **caractérisé en ce qu'**on choisit le diamètre (D) de la boucle (SL) si grand que des modifications de la vitesse de retrait de l'élément (BA1) de câble de télécommunication, qui sont provoquées, considéré dans le sens de sa direction (AZ) de transport par au moins un dispositif de traitement en aval de la boucle (SL), sont compensées dans une grande mesure en longueur.

17. Procédé suivant l'une quelconque des revendications précédentes, **caractérisé en ce que** l'on fait passer l'élément (BA1) de câble de communication avec l'aide d'au moins un dispositif (RA1) auxiliaire de retrait sur la boucle (SL).

18. Procédé suivant la revendication 17, **caractérisé en ce que** le dispositif (RA) auxiliaire de retrait fonctionne entre le dispositif (VT) de dépôt et la boucle (SL), de façon à ce que l'élément (BA1) de câble de télécommunication soit transporté vers l'avant dans une grande mesure avec peu de contrainte de traction après le dispositif (RA1) auxiliaire de retrait.

19. Procédé suivant l'une quelconque des revendications précédentes, **caractérisé en ce que** l'on utilisé comme élément de câble de télécommunication s'étendant en longueur un élément (BA1) de transmission optique.

20. Dispositif de déroulement d'un câble (B1) d'un élément (BA1) de câble de télécommunication s'étendant en longueur de son dispositif (VT) de dépôt, sur lequel l'élément (BA1) de câble de télécommunication a été posé en ayant une pluralité de spires, notamment suivant l'une des revendications précédentes, dans lequel il prévu des moyens (Ra, RO1 avec RO4, MO1) de transport de l'élément (BA1) de câble de télécommunication s'étendant à la longueur de son dispositif (VT) de dépôt en direction (AZ) axiale, de sorte qu'il peut être formé au moins une boucle (SL) fermée dans la direction d'enroulement d'origine du dispositif (VT) de dépôt de l'élément (BA1) de câble de télécommunication sur au moins un emplacement longitudinal de son trajet (AW) de transport longitudinal, la boucle (SL) ayant la même direction de courbure que celle que présentent les spires, déposées du dispositif (VT) de dépôt, de l'élément (BA1) de en ce qu'il est prévu un dispositif (US) de mesure en continu et sans contact de modification (ΔAS) de la forme géométrique de la boucle (SL), et en ce qu'il est associé à ce dispositif (US) de mesure un dispositif (SE) de commande, qui déduit de ces modifications (ΔAS) au moins un critère de commande pour le mouvement de transport de l'élément (BA1) de câble de télécommunication s'étendant en longueur.

21. Dispositif suivant la revendication 20, **caractérisé en ce qu'**il est prévu comme dispositif (US) de mesure un capteur d'ultrason.

22. Dispositif suivant l'une quelconque des revendications 20 ou 21, **caractérisé en ce que** le dispositif (VT) de dépôt est formé par un plateau horizontal tournant.

23. Dispositif suivant l'une des revendications 20 ou 21, **caractérisé en ce que** le dispositif (VT) de dépôt est formé par une bobine de réserve, sur le corps de bobine cylindrique de laquelle est enroulé l'élément (BA1) de câble de télécommunication.

24. Dispositif suivant l'une quelconque des revendications 20 à 23, **caractérisé en ce que** le dispositif (SE) de commande coopère avec au moins un dispositif (MOI) d'entraînement du dispositif (VT) de dépôt et/ou avec au moins un dispositif (RA) de retrait pour le transport vers l'avant de l'élément (BA1) de câble de télécommunication.

25. Dispositif suivant l'une quelconque des revendications 20 à 24, **caractérisé en ce que** les moyens de transport comportent au moins un dispositif (FV) de guidage à l'aide duquel l'élément (BA1) de câble de télécommunication peut être mis sur la boucle (SL) respective.

26. Dispositif suivant la revendication 25, **caractérisé en ce que** le dispositif (FV) de guidage est formé par au moins un galet (RO1 avec R04) monté tournant.

27. Dispositif suivant l'une des revendications 20 à 26, **caractérisé en ce que**, considéré dans la direction (AZ) de transport, il est monté en aval du dispositif (VT) de dépôt, un dispositif (RA1) de retrait qui envoie l'élément (BA1) de câble de télécommunication à la boucle (SL) en aval.

28. Dispositif suivant l'une des revendications 20 à 27, **caractérisé en ce que** la boucle (SL) est conçue librement mobile.

29. Dispositif suivant l'une quelconque des revendications 20 à 28, **caractérisé en ce que** l'élément de câble de télécommunication s'étendant en longueur est un élément (BA1) transmission optique.

30. Dispositif suivant l'une quelconque des revendications 20 à 29, **caractérisé en ce que** les moyens (MO1, RA, SV) de transport coopèrent avec le dispositif (SE) de commande, de façon à pouvoir maintenir toujours dans une grande mesure constant un diamètre (D) prescrit de la boucle (SL).

31. Dispositif suivant l'une quelconque des revendications 20 à 30, **caractérisé en ce que** l'élément (BA1) de câble de télécommunication est guidé après avoir passé la boucle (SL) vers un dispositif (SZV) de traitement ultérieur.
